(19) Europäisches Patentamt
European Patent Office
Office européen des brevets

(11) **EP 1 139 131 B1**

(12) # EUROPEAN PATENT SPECIFICATION

(45) Date of publication and mention
of the grant of the patent:
**17.12.2008   Bulletin 2008/51**

(51) Int Cl.:
***G02B 6/38*** (2006.01)

(21) Application number: **01302976.4**

(22) Date of filing: **29.03.2001**

(54) **Optical fiber array**

Optische Fasermatrixanordnung

Matrice de fibres optiques

(84) Designated Contracting States:
**DE FR GB IT**

(30) Priority: **30.03.2000   JP 2000093230
19.02.2001   JP 2001042293**

(43) Date of publication of application:
**04.10.2001   Bulletin 2001/40**

(73) Proprietor: **NGK INSULATORS, LTD.
Nagoya-City, Aichi Pref.   467-8530 (JP)**

(72) Inventors:
 • **Matsumoto, Akira
Nagoya-shi,
Aichi-ken 467-8530 (JP)**
 • **Fukuyama, Masashi
Nagoya-shi,
Aichi-ken 467-8530 (JP)**

(74) Representative: **Paget, Hugh Charles Edward et al
Mewburn Ellis LLP
York House
23 Kingsway
London WC2B 6HP (GB)**

(56) References cited:
**EP-A- 0 573 288          EP-A- 0 943 942
US-A- 5 764 833**

 • **PATENT ABSTRACTS OF JAPAN vol. 015, no. 391 (P-1259), 3 October 1991 (1991-10-03) & JP 03 155503 A (NIPPON SHEET GLASS CO LTD), 3 July 1991 (1991-07-03)**
 • **PATENT ABSTRACTS OF JAPAN vol. 008, no. 018 (P-250), 26 January 1984 (1984-01-26) & JP 58 178310 A (KOGYO GIJUTSUIN;OTHERS: 0J), 19 October 1983 (1983-10-19)**

**EP 1 139 131 B1**

**Description**

**BACKGROUND OF THE INVENTION**

FIELD OF THE INVENTION

The present invention relates to an optical fiber array having a holding member mounted thereto, and having optical fibers arranged and held with predetermined intervals.

More particularly, the present invention relates to a technique of preventing release of the holding member.

DESCRIPTION OF RELATED ART

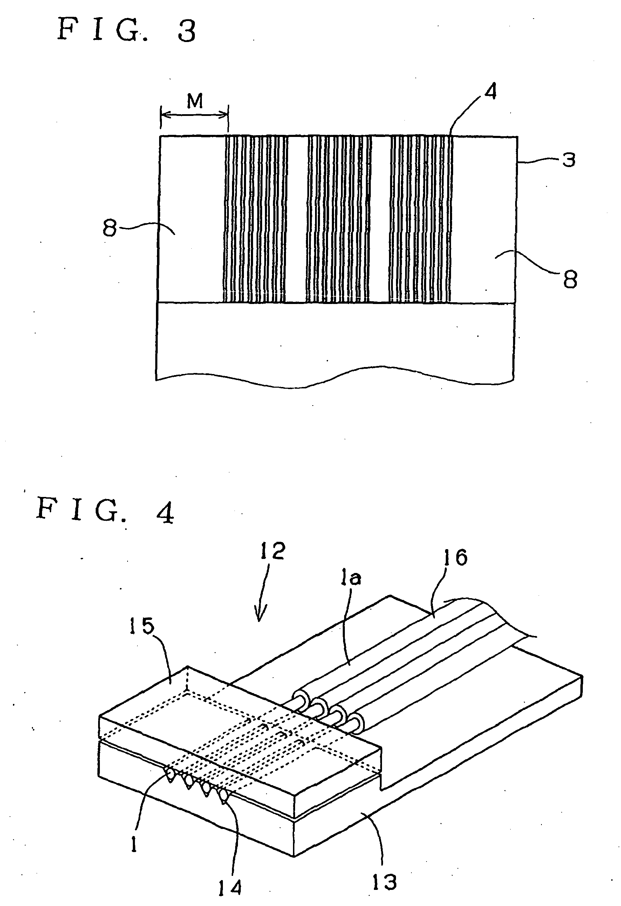

Conventionally, a fiber array having optical fibers arranged therein and fixed thereto is formed as shown in FIG. 4. In FIG. 4, reference numeral 12 denotes a holding member that consists of a substrate 13 and a cover plate 15. A plurality of V grooves 14 having a V shaped section (housing grooves) are formed at the substrate, optical fibers (optical fiber bare portions) 1 are housed in the individual V grooves 14, and an adhesive is filled. Then, the cover plate 15 is covered to pinch the optical fibers 1, and the optical fibers 1 are adhered and fixed into the V grooves 14. In addition, reference numeral la denotes covered optical fibers, where a plurality of the optical fibers la are coupled with each other to form a fiber ribbon 16.

The holding member 12 is formed by processing a glass plate, for example, and the V grooves 14 are formed in parallel on a substrate top which is ground to a mirror face. In addition, a space between the adjacent V grooves is small so that a wide adhesion face is formed to the right and left sides of a bundle of the V grooves in order to ensure adhesion between the substrate 13 and the cover plate 15.

However, the above described fiber array is often placed under outdoor severe environment. That is, the fiber array is subject to from a high temperature of 60 ˚C to a low temperature of -40 ˚C, and is subjected to dry environment like a desert and humid high temperature environment. The optical fiber array must maintain constant and proper characteristics under such severe environment for a long time. However, in the case where the above fiber array is subject to such environment for a long time, there has occurred a phenomenon that the substrate 13 and the cover plate 15 fixing the optical fibers 1 are released because of variation with an elapse of time, and the optical fibers are unreliably fixed.

In an optical fiber, if an optical axis deviates from a predetermined position, a transmission loss is increased between this optical fiber and optical part being connected therewith. Thus a very high position precision of 0.5 microns or less is required. Therefore, if the above release phenomenon occurs, a displacement occurs, resulting in degraded transmission characteristics. In addition, finally, an optical fiber may slip off from the substrate. Also known are fibre arrays where the fibres protrude a significant amount from the upper surface of a V-grooved substrate thus leading to thicker adhesive layers between presser plate and substrate (see e.g. EP 0573288). For such arrays it is also known to provide a step in the substrate for forming a support platform for the coated fibre parts. EP 0943942 describes a fibre array with V-grooved substrate with such a step and a presser plate having a width different to the width of the substrate. Rounding and/or tapering of substrate edges for stress relief is also known (see e.g. EP 0926522).

SUMMARY OF THE INVENTION

The general aim herein is to provide new and useful optical fibre array constructions with particular reference to the security of a cover plate, and in which the release of the holding member or the like hardly occurs even under severe environment, and proper characteristics are maintained.

According to a first aspect of the present invention, there is provided an optical fiber array according to claim 1.

Preferably the distance Y between the substrate and the cover plate is $L / 4 \leqq Y \leqq L$.

Preferably the adhesive is epoxy-based.

The Inventor has found the following through testing. That is, the above release is caused by a thin adhesive layer between a substrate and a cover plate that spreads to the outside of the outermost portion of a housing groove. Namely, in the case where a circular optical fiber is housed in a V groove, there occurs contraction in curing an adhesive caused by an adhesive stay portion at the periphery of optical fibers (in the housing groove) ; there is a difference in thermal expansion rate between the adhesive and the substrate or between the adhesive and the cover plate. Alternatively, increasing humidity causes expansion of the adhesive. And the stress concentration of the adhesive in the V groove caused by these phenomena cannot be sufficiently by the thin adhesive layer.

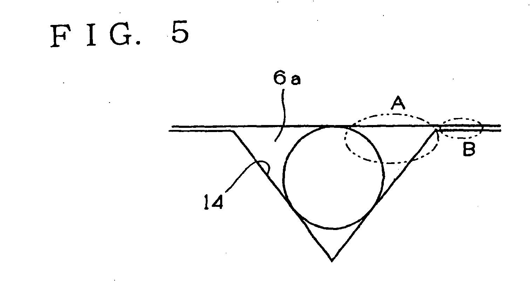

A fiber array is mounted by an adhesive, and is formed in its complicated shape. Thus, there exists a variety of stresses such as partial strong stress or entire stress between the substrate and the cover plate. The partial stress occurs at a resin stay portion such as the periphery of the fibers in a V groove, as described above. This is believed to be due to a mechanism in which the stress of the adhesive stay portion indicated by A shown in FIG. 5 is applied to a portion indicated by B, and if the adhesive layer of this portion is thin, this stress cannot be absorbed, and a release occurs with the portion of B.

For example, if a release occurs with a portion such as B, the entire stress is applied to this portion or water invades the release portion, whereby such release is further expanded.

The above construction is provided in response to such action of adhesive, whereby the adhesive layer can absorb the stress concentration, and a release is unlikely to occur between the optical fiber and the substrate or fixed substrate even under severe environment. Then proper characteristics can be maintained.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out hereinafter.

## BRIEF DESCRIPTION OF THE SEVERAL VIEWS OF THE DRAWINGS

The accompanying drawings, illustrate presently preferred embodiments of the present invention and, together with the general description given above and the detailed description of the preferred embodiments given below, serve to explain the principle of the present invention.

FIG. 1 is an enlarged sectional view of an optical fiber array showing an example according to the preferred embodiments of the present invention;

FIG. 2A to FIG. 2H are photographs for explaining how a fiber array adhesive portion is changed due to environment testing, where FIG. 2A to FIG. 2D each show a construction of the present invention, FIG. 2E to FIG. 2H each shows a conventional construction;

FIG. 3 is an illustrative view of a holding member used in environment testing shown in FIG. 2;

FIG. 4 is a perspective view of an optical fiber array;

FIG. 5 is an enlarged sectional view illustrating one fiber portion shown in FIG. 4:

FIG. 6A to FIG. 6C each show how is an adhesive layer end of an optical fiber array, where FIG. 6A is a sectional view illustrating the present invention, FIG. 6B is a sectional view illustrating another example of the present invention, and FIG. 6C is a sectional view illustrating a conventional example; and

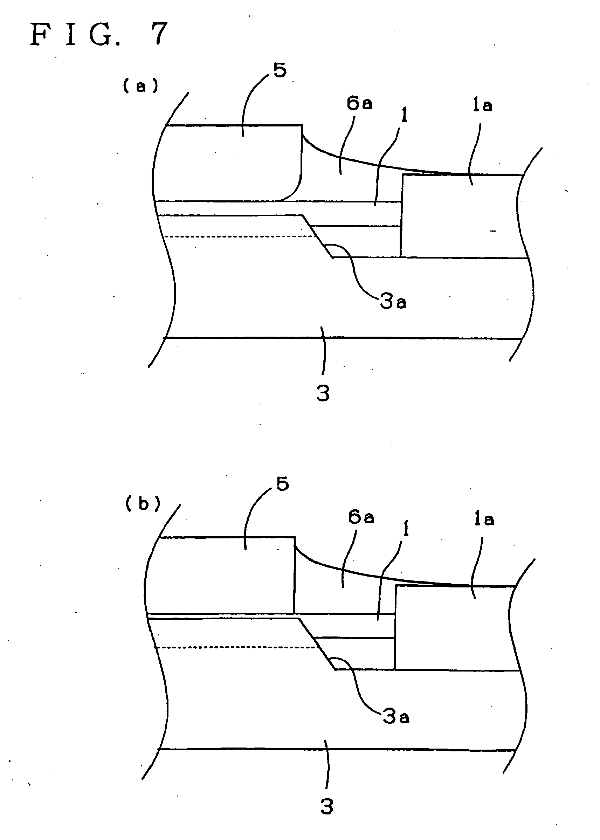

FIG. 7A and FIG. 7B show a construction of a V groove rear end of the optical fiber array, where FIG. 7A is an illustrative side view of essential parts according to the present invention, and FIG. 7B is an illustrative side view of conventional essential parts, wherein reference numeral 1 denotes an optical fiber, reference numeral 2 denotes a holding member, reference numeral 3 denotes a substrate, reference numeral 3a denotes a step, reference numeral 4 denotes a V groove, reference numeral 5 denotes a cover plate, reference numeral 6 denotes an adhesive layer, reference numeral 6a denotes an adhesive, reference code L denotes a distance from a contact point between a V groove and an optical fiber to a cover plate, reference code M denotes a distance from a center of a housing groove at the outer most portion of the substrate to a substrate end, reference code P denotes a contact point between a V groove and an optical fiber, and Y denotes thickness of an adhesive layer.

## DETAILED DESCRIPTION OF THE EMBODIMENT

Reference will now be made in detail to the presently preferred embodiments of the invention as illustrated in the accompanying drawings, in which like reference numerals designate like or corresponding parts.

Hereinafter, preferred embodiments of the present invention will be described in detail with reference to the accompanying drawings.

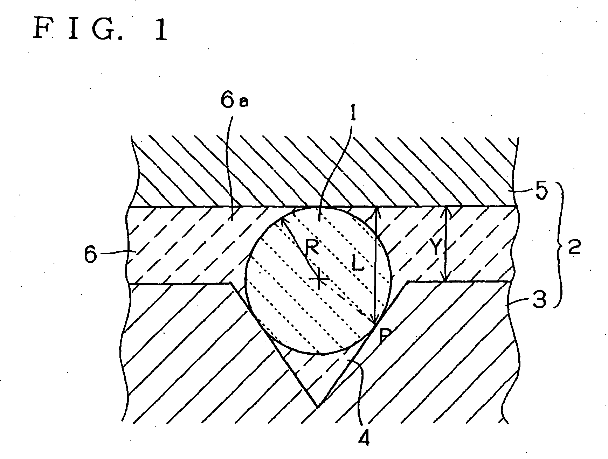

FIG. 1 is an enlarged sectional view of an optical fiber array according to the present invention, wherein reference numeral 1 denotes an optical fiber (a bare optical fiber), reference numeral 2 denotes a holding member that consists of a substrate 3 and a cover plate 5, a V groove 4 is formed at the substrate 3, and an optical fiber 1 is housed in the V groove 4. In addition, an adhesive 6a is filled at the periphery of the optical fiber 1 and between the substrate 3 and the cover plate 5. An opening angle of the V groove 4 is 70 degrees, for example, and the optical fiber 1 is formed to be 62.5 microns in radius, for example.

The V groove 4 is formed so that a part of the optical fiber 1, being housed therein, is slightly protruded above the upper face of the substrate 3, and is formed so that its protrusion length is substantially equal to thickness of the adhesive layer 6 formed between the substrate 3 and the cover plate 5. In addition, a distance M between the center of the housing groove at the outer most portion of the substrate 3 and the substrate end (shown in FIG. 3) is 5 times or more of the optical fiber radius relevant to the radium R of the optical fiber 1.

Then, the thickness Y of this adhesive layer 6 is defined as follows when a distance L from a contact point P between the V groove 4 and the optical fiber 1 to the cover plate 5 is defined as a reference.

$$L / 6 \leqq Y \leqq L \ldots (Range\ 1)$$

The thickness Y of the adhesive layer 6 is defined in the above range, whereby as shown in the test result described later, the adhesive layer 6 absorbs a stress generated from contraction generated while the adhesive is cured or a difference in thermal expansion rate or expansion rate between the substrate 3 and the cover plate 5 so that constant characteristics can be maintained without being released even under severe environment.

In addition, from the viewpoint of adhesive, the stress caused by the adhesive increases particularly with higher Young Modulus of the adhesive. For example, in the case where an epoxy based adhesive is employed, the Young Modulus is generally high as compared with an acryl based or silicon based adhesive. Thus, the stress is also increased, and the adhesive layer structure of the present application is effective. In particular, when an epoxy based adhesive of Young Modulus not less than 2 kgf / mm$^2$ is used, the stress is particularly increased. Thus, the adhesive layer structure of the present application is effective.

The adhesive used here denotes one which is used for adhering of at least V groove periphery (adhering and bonding of the bare fiber, cover plate and substrate) . In addition, in order for the optical fiber 1 to come into reliable two point contact with the inclined face of the V groove 4, it is preferable that a realistic contact point is moved upwardly with a margin of about 10 microns from a theoretical contact point in consideration of processing precision or measurement precision. In this case, the above (range 1) is (L - 10 microns) / 6 $\leqq$ Y $\leqq$ (L - 10 microns).

Table 1 compares changes of the adhesive portion when environment test (boiling test) is carried out by a fiber array created by changing thickness Y of the adhesive layer 6, where the fiber array is soaked in boiling water to investigate an occurrence of the release after a predetermined time has elapsed. In the table, O denotes a good state in which no release has occurred, $\Delta$ denotes a state in which partial release has occurred, and X denotes a state in which an extensive release has occurred.

Table 1

| Thickness of adhesive layer Y | Boiling time | | | |
|---|---|---|---|---|
| | 15hr | 36hr | 60hr | |
| L/2 | ○ | ○ | ○ | Photograph |
| L/4 | ○ | ○ | ○ | |
| L/6 | ○ | ○ | $\Delta$ | |
| L/8 | × | × | × | Photograph |

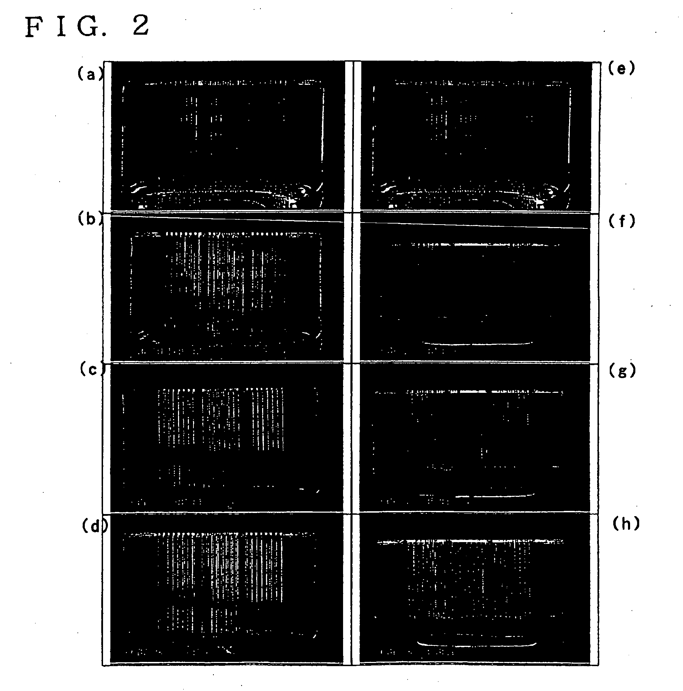

FIG. 2A to FIG. 2H are photographs for explaining how an optional fiber array adhering portion is changed due to the above environment test, wherein FIG. 2A to FIG. 2D are photographs of Y = L / 2 shown in Table 1, and FIG. 2E to FIG. 2H are photographs of Y = L / 8 in a conventional example. In addition, the holding member 3 of the optical fiber array taken as each of the photographs shown in FIG. 2 is schematically shown in FIG. 3.

FIG. 3 is a plan view of the holding member. As shown in the figure, the holding member 2 provided for environment test has three groups each consisting of eight grooves on substrate 3. An optical fiber array is formed in such a way that optical fibers 1 are housed in the holding member 2, adhesive is applied, and then, the cover plate 5 is adhered. The protrusion quantity of the optical fiber 1 from the substrate is changed by changing the size of V groove so that the thickness Y of the adhesive is set to its desired thickness.

In FIG. 2, although there is no change after 60-hour boiling in the left photographs A to D, it is possible to verify that there occurs a spot-like pattern on main adhesive faces 8, 8 of the left and right of the substrate after 15 hours and on in the right photographs E to H, and a portion in a different state from a state before boiled occurs between the optical fiber groups as well. These sites are where adhesive has been released. From these photographs, in the case where the right side, i.e., the thickness Y of the adhesive layer is L / 8, it is found that release has already occurred after 15 hour boiling. That is, when the left side, i.e., Y is L / 2, no release occurs even after 60 hour boiling.

From these and other test results we judge that, as long as a distance between the center axis of the housing groove at the outermost portion and the substrate end is 5 times or more of the optical fiber radius, and the adhesive layer thickness Y is L / 6 or more, the release hardly occurs, and the optical fiber array can be used even under severe environment. Further, if the adhesive layer thickness Y is L / 4 or more, it can be judged that no release occurs, and a

**EP 1 139 131 B1**

good state can be continuously maintained.

In the meantime, the optical fiber array is generally formed so that the fibers are pressed in the substrate V groove 4 by the cover plate 5. Although optical grinding is applied to the tip end face of the optical fiber array, the fiber end face is required to be set to a desired angle. Thus, in general, grinding is performed when a side face parallel to the V groove 4 is defined as a reference during grinding. At this time, although the side face of the substrate 3 can be easily processed so as to be parallel to the V groove 4, the cover plate 5 is merely loaded on the optical fibers 1. Thus, it is not easy that the side face of the cover plate 5 is parallel to the optical fibers 1.

Therefore, it is natural that the grinding standard face is on the side face of the substrate 3 so that the cover plate 5 should not project beyond the right and left of the substrate 3 in order to ensure this state. As a measure, the width of the cover plate 5 is made smaller than that of the substrate 3, whereby slight displacement can be permitted, thus making it possible to apply the cover.

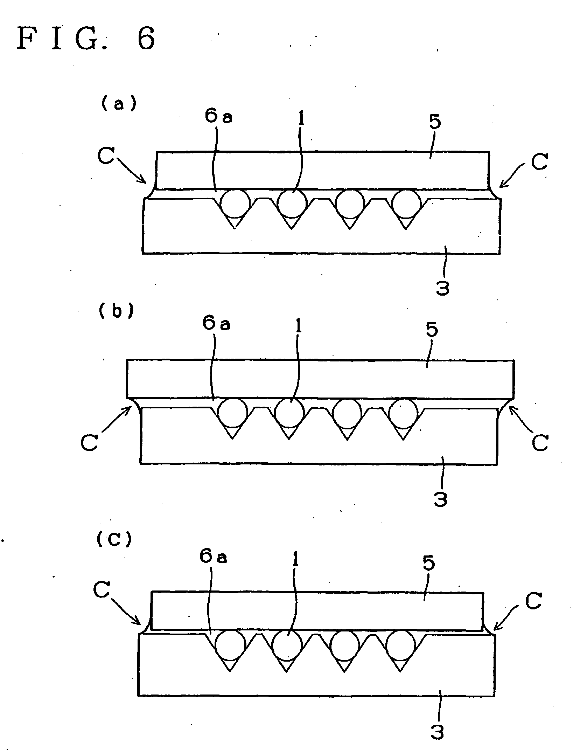

In this case, as shown in FIG. 6 that is the sectional view illustrating the optical fiber array, the adhesive 6a is pooled at a stepped portion C in a meniscus manner, which provides an effect of increasing adhesive force. However, in the case where the adhesive layer is thin, the stress caused here results in an occurrence of release (the mechanism in which a release occurs is similar to that in V groove) . In particular, this site is situated at the outside, and is subjected to open air. Thus, if a release occurs, it permits moisture to easily invade, which accelerates the progress of release.

So, this site is important when trying to avoid detachments. As shown in Fig. 1, as long as a thick adhesive layer is ensured, the stress does not concentrate, and a release hardly occurs. Thus, the construction according to the present invention can ensure high reliability in the same way as the V groove portion. FIG. 6A is a sectional view illustrating an optical fiber array according to the present invention, and FIG. 6C is a sectional view illustrating a conventional optical fiber array.

As shown in FIG. 6B, even if the width of the cover plate is greater than that of the substrate, a meniscus-like pool portion is formed at the stepped portion C. The construction of the present invention, i.e., a large adhesive layer is ensured, whereby the stress does not concentrate, a release does not occur, and high reliability can be ensured in the same manner as the V groove portion. However, as described above, the end face of the optical fiber array is difficult to grind precisely, and thus, the cover plate is formed to be smaller than the substrate in width.

As shown in FIG. 7A that is a view illustrating a side face of the optical fiber array, in the case where a step 3a is provided at the rear end of a V groove in order to reduce the concentration of the stress applied to the tip end of the optical fiber, and a cover portion mount face is provided at the rear part of the substrate by one stage lower than a V groove forming face, a large amount of adhesive 6a exists in this step 3a. Thus, the stress at this portion caused by the adhesive concentrates on the adhesive layer 6 between the substrate 3 and the cover plate 5. In the case of such structure as well, this construction is particularly effective.

Further, in FIG. 7A, although R is provided at the end at the substrate side of the cover plate 5, a taper or R is applied to the substrate side in this manner in order to reduce the stress more significantly. Namely, a large amount of adhesive thickness is made gradually closer to the adhesive thickness Y, whereby the stress concentration can be further prevented.

With respect to this stepped portion, an optical fiber is easily damaged by an edge of the step. In the case where a release occurs even partially at this portion, there is apprehension that the damage of the fiber due to the step is further accelerated by the function of stress. Thus, it is very important that this portion is prevented from a release.

In addition, in the above embodiments, when the optical fibers are fixed by pinching them between the substrate and the cover plate, the cover plate is abutted against the optical fiber so that the thickness of the adhesive layer is equal to the height of the protrusion on the substrate of the optical fibers. However, as long as the optical fibers securely come into contact with a V groove at two points, the cover plate may not be abutted with the optical fiber. Further, although a plurality of V grooves are provided on the substrate, even if one V groove exists, an adhesive layer is formed as described above, whereby good characteristics can be maintained.

(Advantageous Effect of the Invention)

As has been described above in detail, according to the invention a release hardly occurs between the optical fiber and the substrate or fixed substrate, and good characteristics can be maintained.

According to the invention, in addition to advantageous effect mentioned above, the width of the cover plate is different from that of the substrate. Thus, a meniscus-like adhesive pool portion is formed, and adhesive force increases.

According to the invention, in addition to advantageous effect above, the stress applied to the tip end of the optical fiber is reduced, and a release hardly occurs.

# EP 1 139 131 B1

**Claims**

1.  An optical fiber array comprising a substrate (3) having one or more V-section housing grooves (4) on a top face, each said groove (4) housing bare optical fiber tip end portion (1) of an optical fiber, the array having a cover plate (5) over said tip end portion or portions (1) in said groove or grooves (4) and an adhesive filled between the substrate (3) and the cover plate (5) so as to fix the optical fiber or fibers to the groove or grooves, wherein the lateral distance from a side edge of the substrate (3) to the, or to the nearest, said groove (4) is at least 5 times the radius of the optical fiber, wherein a placement face of said substrate (3) on which is placed a covered portion of said optical fiber or fibers is provided rearwardly of said top face having said groove or grooves (4), and a step (3a) is provided between said top face and the placement face, said step (3a) being tapered or rounded so that the thickness of said adhesive changes gradually at said step (3a) in the longitudinal direction of the fibres, and wherein the width of the cover plate (5) is different from the width of the substrate (3) such that a meniscus-like pool portion (c) of the adhesive is formed at the sides of the array, the array being **characterised in that** the distance Y between the top face of the substrate (3) and the cover plate (5) is L / 6 $\leqq$ Y $\leqq$ L, where L is a shortest distance between the cover plate (5) and the contact point between the housed optical fiber end portion and its housing groove.

2.  An optical fiber array as claimed in claim 1, wherein the height of protrusion from the substrate top face of the optical fiber end portion (1) housed in the groove (4) is substantially equal to said distance Y between the substrate (3) and the cover plate (5).

3.  An optical fiber array as claimed in claim 1 or claim 2, wherein said distance Y between the substrate and the cover plate is L / 4 $\leqq$ Y $\leqq$ L.

4.  An optical fiber array as claimed in any one of claims 1 to 3, wherein the adhesive is epoxy-based.

**Patentansprüche**

1.  Optische Fasermatrixanordnung, umfassend ein Substrat (3) mit einer oder mehrerer Aufnahmenuten (4) mit V-förmigem Querschnitt auf einer oberen Fläche, wobei jede Nut (4) einen unumhüllten optischen Faser-Scheitel-Endabschnitt (1) einer optischen Faser aufnimmt, wobei die Matrixanordnung eine Abdeckplatte (5) über dem Scheitel-Endabschnitt/den Spitzenendabschnitten (1) in der Nut/den Nuten (4) aufweist und ein Haftmittel zwischen das Substrat (3) und die Abdeckplatte (5) gefüllt ist, um die optische Faser/die optischen Fasern in der Nut/den Nuten zu befestigen, wobei der seitliche Abstand von einer Seitenkante des Substrats (3) zu der, oder zur nächsten, Nut (4) zumindest dem Fünffachen des Radius der optischen Faser entspricht, wobei eine Anordnungsfläche des Substrats (3), auf der ein umhüllter Abschnitt der optischen Faser(n) angeordnet ist, hinter der oberen Fläche mit der Nut oder den Nuten (4) bereitgestellt ist, und eine Stufe (3a) zwischen der oberen Fläche und der Anordnungsfläche bereitgestellt ist, wobei die Stufe (3a) abgeschrägt oder abgerundet ist, so dass sich die Dicke des Haftmittels an der Stufe (3a) in Längsrichtung der Fasern schrittweise verändert, und wobei sich die Breite der Abdeckplatte (5) von der Breite des Substrats (3) unterscheidet, sodass an den Seiten der Matrixanordnung ein halbmondförmiger Muldenabschnitt (c) des Haftmittels ausgebildet ist, wobei die Matrixanordnung **dadurch gekennzeichnet ist, dass** der Abstand Y zwischen der oberen Fläche des Substrats (3) und der Abdeckplatte (5) L/6 $\leq$Y$\leq$L ist, wobei L der geringste Abstand zwischen der Abdeckplatte (5) und dem Kontaktpunkt zwischen den aufgenommenen Endabschnitten der optischen Fasern und deren Aufnahmenut ist.

2.  Optische Fasermatrixanordnung nach Anspruch 1, worin die Höhe der Ausbuchtung von der oberen Fläche des Substrates des optischen Faser-Endabschnittes, welcher in der Nut aufgenommen ist, die im Wesentlichen gleich dem Abstand Y zwischen dem Substrat (3) und der Abdeckplatte (5) ist.

3.  Optische Fasermatrixanordnung nach Anspruch 1 oder 2, worin der Abstand Y zwischen dem Substrat und der Abdeckplatte L/4 $\leq$Y$\leq$ L ist.

4.  Optische Fasermatrixanordnung nach einem der Ansprüche 1 bis 3, worin das Haftmittel ein Haftmittel auf Epoxybasis ist.

**Revendications**

1. Réseau de fibres optiques comprenant un substrat (3) ayant une ou plusieurs rainures de logement en V (4) sur une face supérieure, chacune desdites rainures (4) logeant une extrémité en pointe de fibre optique dénudée (1) d'une fibre optique, le réseau ayant un couvercle (5) sur ladite ou lesdites extrémités en pointe (1) situées dans ladite ou lesdites rainures (4) et un adhésif rempli entre le substrat (3) et le couvercle (5) de manière à fixer la ou les fibres optiques à la ou les rainures, où la distance latérale d'un bord latéral du substrat (3) à ladite rainure, ou à la rainure la plus proche (4), est au moins 5 fois le rayon de la fibre optique, où une face de placement dudit substrat (3) sur laquelle est placée une partie recouverte de ladite fibre optique, ou desdites fibres optiques, est disposée à l'arrière de ladite face supérieure ayant ladite rainure, ou lesdites rainures (4), et une marche (3a) est disposée entre ladite face supérieure et la face de placement, ladite marche (3a) étant effilée ou arrondie de sorte que l'épaisseur dudit adhésif change graduellement au niveau de ladite marche (3a) dans la direction longitudinale des fibres, et où la largeur du couvercle (5) est différente de la largeur du substrat (3) de manière à ce qu'une bordure en ménisque (C) de l'adhésif soit formée au niveau des côtés du réseau, le réseau étant **caractérisé en ce que** la distance Y entre la face supérieure du substrat (3) et le couvercle (5) soit telle que $L/6 \leq Y \leq L$, où L est la distance la plus courte entre le couvercle (5) et le point de contact entre l'extrémité de fibre optique logée et sa rainure de logement.

2. Réseau de fibres optiques tel que revendiqué dans la revendication 1, dans lequel la hauteur de la protubérance à partir de la face supérieure du substrat de l'extrémité de la fibre optique (1) logée dans la rainure (4) est sensiblement égale à ladite distance Y entre le substrat (3) et le couvercle (5).

3. Réseau de fibres optiques tel que revendiqué dans la revendication 1 ou dans la revendication 2, dans lequel ladite distance Y entre le substrat et le couvercle est telle que $L/4 \leq Y \leq L$.

4. Réseau de fibres optiques tel que revendiqué dans l'une quelconque des revendications 1 à 3, dans lequel l'adhésif est à base d'époxy.

FIG. 1

F I G. 2

EP 1 139 131 B1

F I G.　3

F I G.　4

10

F I G. 5

# FIG. 6

(a)

(b)

(c)

# F I G. 7

(a)

(b)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0573288 A
- EP 0943942 A
- EP 0926522 A